# EUROPEAN PATENT APPLICATION

(11) **EP 3 267 380 A1**
(43) Date of publication of application: **10.01.2018**
(21) Application number: 17176309.7
(22) Date of filing: 16.06.2017
(51) Int. Cl.: G06Q 10/08

(54) **METHOD AND SYSTEM FOR DETERMINING A DIFFERENCE IN A CONSIGNMENT**

(30) Priority: 28.06.2016 NL 2017057
(71) Applicant: TNT Holdings B.V., 2132 LS Hoofddorp (NL)
(72) Inventor: Holleman, Pieter, 2132 LS Hoofddorp (NL); Ree, Maarten Sicco Dirk, 2132 LS Hoofddorp (NL); McLoughlin, Niall, 2132 LS Hoofddorp (NL)
(74) Representative: De Vries & Metman

(57) **Abstract**

A first determining system determines a first weight, a first size and/or a first shape of a consignment at a first moment in time. A second determining system determines a second weight, a second size and/or a second shape of the consignment at a second moment in time. A processor determines a weight difference between the second weight and the first weight, a size difference between the second size and the first size and/or a shape difference between the second shape and the first shape. A processor then determines a difference in the consignment on the basis of the weight difference, the size difference and/or the shape difference. A notification may be transmitted to one or more recipients when the difference is of such a nature that the consignment might be damaged or might be a threat.

## Description

### Field of the invention

The invention relates to a method of determining a difference in a consignment.

The invention further relates to a system for determining a difference in a consignment.

The invention also relates to a computer program product enabling a computer system to perform such a method.

### Background of the invention

When a consignment is shipped on request of a sender from an origin address to a destination address, there is a possibility that something happens to the consignment. For example, the consignment might accidentally be damaged. When the consignment arrives damaged at the destination address, the recipient of the consignment might refuse the consignment or might return the consignment to the sender himself after discovering the damage. After the consignment has been returned to the sender, the sender may determine that there is a difference between the consignment originally shipped and the consignment returned by the recipient and complain to the company that shipped the consignment.

A drawback of this approach is that it takes a relative long time before a difference in the consignment, e.g. due to damage, is determined.

### Summary of the invention

It is a first object of the invention to provide a method of determining a difference in a consignment, which allows a difference in a consignment to be determined relatively early.

It is a second object of the invention to provide a system for determining a difference in a consignment, which allows a difference in a consignment to be determined relatively early.

According to the invention, the first object is realized in that the method of determining a difference in a consignment comprises the steps of a first determining system determining at a first moment in time a first weight, a first size and/or a first shape of a consignment, a second determining system determining at a second moment in time a second weight, a second size and/or a second shape of said consignment, said second moment in time being later than said first moment in time, a processor determining a weight difference between said second weight and said first weight, a size difference between said second size and said first size and/or a shape difference between said second shape and said first shape, and a processor determining a difference in said consignment on the basis of said weight difference, said size difference and/or said shape difference. The step of determining a difference in said consignment may comprise determining that said consignment might be damaged and/or determining that said consignment might be a threat. Said method may be performed by software running on a programmable device. This software may be provided as a computer program product.

By determining the weight, size and/or shape of the consignment at different moments in time during shipping using multiple determining systems, any difference in the consignment may be determined relatively early. This allows a damage or a threat to be detected before the consignment arrives at the recipient of the consignment and allows the sender of the consignment to be informed via an e-commerce tool, e.g. via a website or an application running on a mobile device.

The method may further comprise the step of transmitting a notification to at least one predetermined recipient if a difference in said consignment is determined, e.g. if said consignment might be damaged or might be a threat. One or more predetermined recipients may be configured by an administrator, for example. The notification may be sent to an internal department of the shipping company, e.g. customer relations or security, or it may be sent directly to the sender of the consignment. The latter may require approval first, e.g. from an employee of the shipping company.

*The* step of transmitting a notification to at least one predetermined recipient may comprise transmitting a notification to at least one first predetermined recipient if said consignment might be damaged and transmitting a notification to at least one second predetermined recipient if said consignment might be a threat. One or more recipients may be configured depending on the (possible) nature of the difference, e.g. damage or threat, and/or on the sender of the consignment, for example. For example, the customer relations department may be notified when the consignment might be damaged and the security department may be notified when the consignment might be a threat. Alternatively, one or more recipients may be configured for all notifications independent of the (possible) nature of the difference.

The step of determining a difference in said consignment may comprise determining that said consignment might be damaged on the basis of said weight difference, said size difference and/or said shape difference. If a consignment has been damaged, it may be possible to resolve this with the sender immediately, thereby reducing the delay before the intended recipient receives an undamaged replacement of the consignment.

The method may further comprise the step of disabling access to an image of said consignment in a user interface for a sender and/or an intended recipient of said consignment if said consignment might be damaged. In order to prevent that a sender and/or an intended recipient sees that the consignment is damaged before being properly notified first, access to the image of the consignment, e.g. on a website or in an application running on a mobile device, may be disabled. This access may later be restored, e.g. when the sender has been informed personally of the damage.

The method may further comprise the step of indicating in a user interface for a sender of said consignment that said consignment might be damaged. The sender of the consignment may be informed via an e-commerce tool, e.g. via a website or an application running on a mobile device, that the consignment might be damaged, for example. This step may require approval first, e.g. from an employee of the shipping company. However, certain customers, e.g. customers with many shipments, may not need to be personally contacted before indicating in their user interface that one of their consignments might be damaged.

The method may further comprise the step of allowing said sender of said consignment to stop transport of said consignment to an intended recipient of said consignment. The sender may decide to stop transport after having looked at images of the consignment, for example. By stopping transport of the consignment, the intended recipient of the consignment is saved the effort of refusing or returning the damaged consignment. The sender may be able to replace a damaged consignment with a replacement consignment under the same (e.g. track & trace) number provided to the (intended) recipient.

The step of determining a difference in said consignment may comprise determining that said consignment might be damaged if said second weight is at least a certain amount lower than said first weight, said second size is at least a certain amount smaller than said first size and/or said first shape and said second shape differ at least a certain amount. The inventors have recognized that if the weight and/or the size of the consignment reduces and/or the shape of the consignment changes, the consignment might be damaged.

The step of determining a difference in said consignment may comprise determining that said consignment might be a threat on the basis of said weight difference and/or said size difference. When it is determined that the consignment might be a threat, security may be warned and the consignment may be isolated and investigated.

*The* step of determining a difference in said consignment may comprise determining that said consignment might be a threat when said second weight is at least a certain amount higher than said first weight and/or said second size is at least a certain amount larger than said first size. The inventors have recognized that if the weight and/or size of the consignment increases, the consignment might be a threat, e.g. include explosive material.

According to the invention, the second object is realized in that the system for determining a difference in a consignment comprises a first determining system configured to determine at a first moment in time a first weight, a first size and/or a first shape of a consignment, a second determining system configured to determine at a second moment in time a second weight, a second size and/or a second shape of said consignment, said second moment in time being later than said first moment in time, and at least one processor configured to determine a weight difference between said second weight and said first weight, a size difference between said second size and said first size and/or a shape difference between said second shape and said first shape and to determine a difference in said consignment on the basis of said weight difference, said size difference and/or said shape difference.

Said at least one processor may be configured to determine that said consignment might be damaged and/or to determine that said consignment might be a threat.

Said at least one processor may be further configured to transmit a notification to at least one predetermined recipient if said consignment might be damaged or might be a threat.

Said at least one processor may be configured to transmit a notification to at least one first predetermined recipient if said consignment might be damaged and to transmit a notification to at least one second predetermined recipient if said consignment might be a threat.

Said at least one processor may be configured to determine that said consignment might be damaged on the basis of said weight difference, said size difference and/or said shape difference.

Said at least one processor may be further configured to disable access to an image of said consignment in a user interface for a sender and/or an intended recipient of said consignment if said consignment might be damaged.

Said at least one processor may be further configured to indicate in a user interface for a sender of said consignment that said consignment might be damaged.

Said at least one processor may be further configured to allow said sender of said consignment to stop transport of said consignment to an intended recipient of said consignment.

Said at least one processor may be further configured to determine that said consignment might be damaged if said second weight is at least a certain amount lower than said first weight, said second size is at least a certain amount smaller than said first size and/or said first shape and said second shape differ at least a certain amount.

Said at least one processor may be further configured to determine that said consignment might be a threat on the basis of said weight difference and/or said size difference.

Said at least one processor may be further configured to determine that said consignment might be a threat when said second weight is at least a certain amount higher than said first weight and/or said second size is at least a certain amount larger than said first size.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations comprising: determining at a first moment in time a first weight, a first size and/or a first shape of a consignment, determining at a second moment in time a second weight, a second size and/or a second shape of said consignment, said second moment in time being later than said first moment in time, determining a weight difference between said second weight and said first weight, a size difference between said second size and said first size and/or a shape difference between said second shape and said first shape, and determining a difference in said consignment on the basis of said weight difference, said size difference and/or said shape difference.

As will be appreciated by one skilled in the art, aspects of the present invention may be embodied as a system, a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the Drawings

These and other aspects of the invention are apparent from and will be further elucidated, by way of example, with reference to the drawings, in which:
- Fig.1 depicts an example of a transport network in which the system of the invention may be used;
- Fig.2 is a block diagram of an embodiment of the system of the invention;
- Fig.3 is a flow diagram of a first embodiment of the method of the invention;
- Fig.4 is a flow diagram of a second embodiment of the method of the invention;
- Fig.5 is a flow diagram of a third embodiment of the method of the invention;
- Fig. 6 exemplifies a first user interface provided by the method of Fig.4;
- Fig. 7 exemplifies a second user interface provided by the method of Fig.4;
- Fig. 8 exemplifies a third user interface provided by the method of Fig.4;
- Fig. 9 exemplifies a fourth user interface provided by the method of Fig.4;
- Fig. 10 depicts a first embodiment of a measurement system for non-conveyable consignments;
- Fig.11 depicts a second embodiment of a measurement system for non-conveyable consignments;
- Fig.12 depicts the measurement system of Fig.11 while scanning a first object in a first direction;
- Fig.13 depicts the measurement system of Fig.11 while scanning the first object in a second direction;
- Fig.14 depicts the measurement system of Fig.11 while scanning a second object in a first direction;
- Fig. 15 depicts the measurement system of Fig.11 after the scanning of the second object is complete;
- Fig.16 depicts an embodiment of a measurement system for conveyable consignments; and
- Fig.17 is a block diagram of an exemplary data processing system for performing the method of the invention.

Corresponding elements in the drawings are denoted by the same reference numeral.

### Detailed description of the Drawings

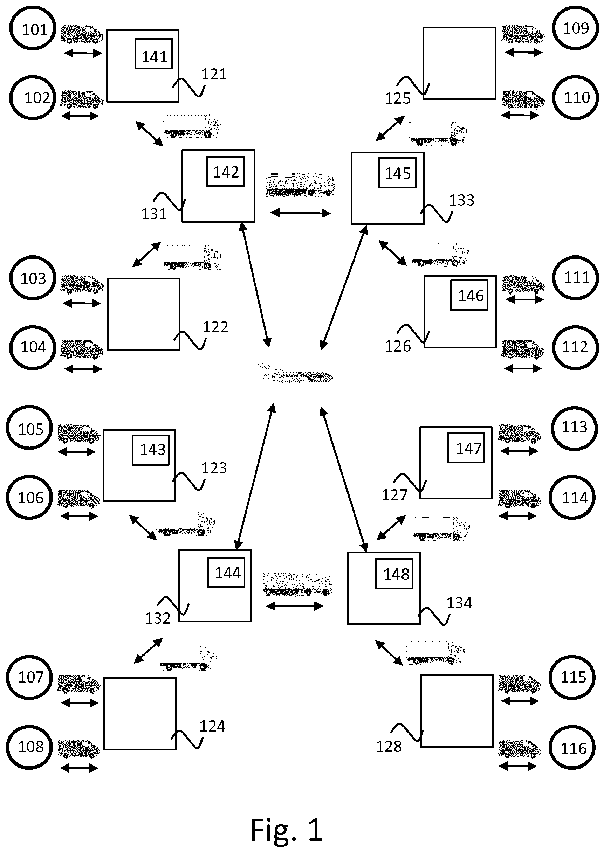

**Fig.1** depicts an example of a transport network in which the system of the invention may be used. Pickup and Delivery (PUD) vehicles, e.g. vans and/or trucks, pick up consignments from and deliver consignments to addresses **101-116**. Consignments collected at addresses **101** and **102** are transported to hub **121** and consignments with addresses **101** and **102** as destination are delivered to their destination from this hub **121**. Consignments collected at addresses **103** and **104** are transported to hub **122** and consignments with addresses **103** and **104** as destination are delivered to their destination from this hub **122**. Consignments collected at addresses **105** and **106** are transported to hub **123** and consignments with addresses **105** and **106** as destination are delivered to their destination from this hub **123**. Consignments collected at addresses **107** and **108** are transported to hub **124** and consignments with addresses **107** and **108** as destination are delivered to their destination from this hub **124.**

Consignments collected at addresses **109** and **110** are transported to hub **125** and consignments with addresses **109** and **110** as destination are delivered to their destination from this hub **125**. Consignments collected at addresses **111** and **112** are transported to hub **126** and consignments with addresses **111** and **112** as destination are delivered to their destination from this hub **126**. Consignments collected at addresses **113** and **114** are transported to hub **127** and consignments with addresses **113** and **114** as destination are delivered to their destination from this hub **127**. Consignments collected at addresses **115** and **116** are transported to hub **128** and consignments with addresses **115** and **116** as destination are delivered to their destination from this hub **128**.

Consignments are transported to and from hubs **121** and **122** via a gateway **131**. Consignments are transported to and from hubs **123** and **124** via a gateway **132**. Consignments are transported to and from hubs **125** and **126** via a gateway **133**. Consignments are transported to and from hubs **127** and **128** via a gateway **134**. Consignments are transported between gateways **131** and **133** and between gateways **132** and **134** by truck. Consignments are transported between gateways **131** and **132**, between gateways **131** and **134,** between gateways **133** and **132** and between gateways **133** and **134** by plane.

For example, when a consignment is shipped from address **101** to address **116**, it is first picked up at address **101** and transported to hub **121** by van or truck. It is then transported from hub **121** to gateway **131** by truck. From gateway **131**, the consignment is transported from gateway **131** to gateway **134** by plane, from where it is transported to hub **128** by truck. From hub **128,** the consignment is delivered to address **116** by van or truck.

Determining systems (e.g. measurement systems) configured to determine the weight, size and/or shape of consignments may be located at all or some of the hubs **121-128** and/or at some or all of the gateways **131-134**. In the example shown in Fig.1, determining systems **141-148** are located at hubs **121**, **123**, **126,** and **127** and at gateways **131-134**. For example, when a consignment is shipped from address **101** to address **116**, its weight, size and/or shape are first determined at determining system **141**, then determined a second time at determining system **142** and finally determined a third time at determining system **148**.

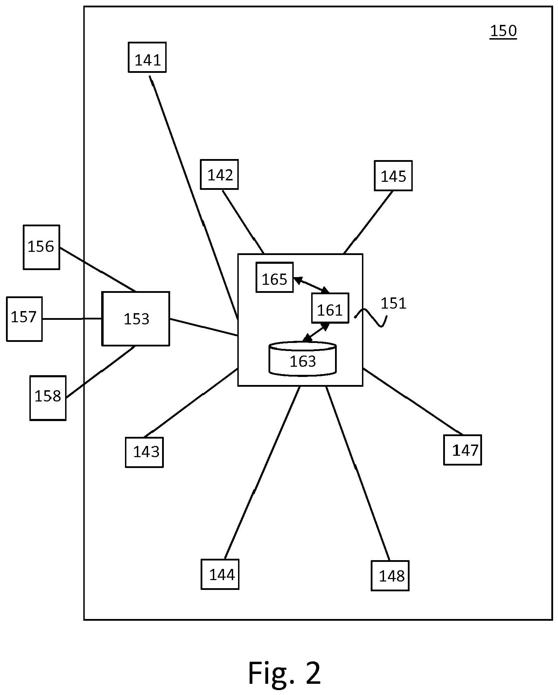

*An* embodiment of the system for determining a difference in a consignment is shown in **Fig. 2**. The system **150** comprises the determining systems **141-148** of **Fig.1****.** A first weight, a first size and/or a first shape are determined by one of the determining systems **141-148** at a first moment in time. A second weight, a second size and/or a first shape are determined by another one of the determining systems **141-148** at a second, later moment in time. The system further comprises a server **151** with a processor **161** configured to determine a weight difference between the second weight and the first weight, a size difference between the second size and the first size and/or a shape difference between the second shape and the first shape. The processor **161** is further configured to determine a difference in the consignment on the basis of the weight difference, the size difference and/or the shape difference.

The server **151** further comprises storage means **163** and a communication interface **165**. The determining systems **141-148** transmit data determined/measured by them to the server **151**, e.g. using the FTP protocol, and the processor **161** then stores the data on the storage means **163**. The processor **161** then uses the stored information at the appropriate time, e.g. when data are received from a determining system that relate to a consignment for which data were previously received from a different determining system.

The system **150** further comprises an external server **153**. The external server 153 is accessed by client devices **156-158.** A client device **156-158** may comprise a mobile phone, a tablet or a PC, for example. The external server **153** may be a web server and/or may communicate with the client devices **156-158** via another protocol than HTTP. The external server **153** may communicate with an application installed on a client device **156-158**, e.g. an application downloaded from an app store from Google or Apple. The external server **153** is used to provide an E-commerce environment, i.e. to communicate with senders and recipients and to provide them with information on consignments (to be) shipped or (to be) received by them. The external server **153** may transmit notifications to the client devices **156-158**, e.g. via application notifications, via SMS/MMS messages or via chat messages,

The server **151** and the external server **153** may run a Windows and/or Unix (or Unix-like) operating system, for example. An Apache HTTP server or another HTTP server may be installed on the external server **153,** for example. The processor **161** may comprise an Intel or AMD processor, for example. The storage means **163** may comprise multiple storage components. The storage means **163** may comprise solid-state (e.g. RAM or flash), optical and/or magnetic storage means, for example. The server **151** may comprise other components typical for a server, e.g. a power supply. The communication interface **165** may comprise a wireless and/or wired network interface, e.g. Ethernet or WiFi. The communication interface **165** may comprise multiple hardware components. In the embodiment shown in **Fig.2**, the processor **161** is part of a separate server **151**. In an alternative embodiment, part or all of the processing performed by the processor **161** may be performed by one or more processors that are part of one or more of the determining systems **141-148**.

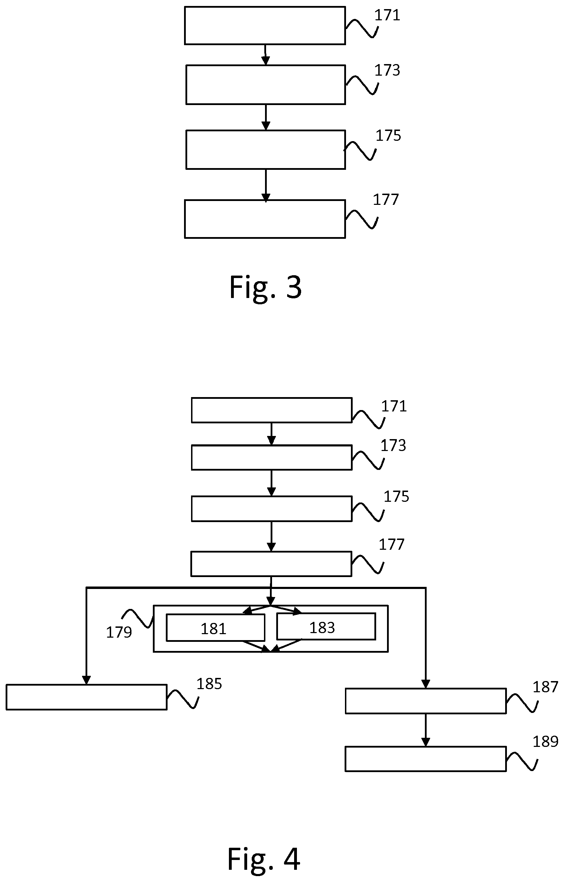

A first embodiment of the method of determining a difference in a consignment is shown in **Fig. 3**. A step **171** comprises a first determining system determining at a first moment in time a first weight, a first size and/or a first shape of a consignment. A step **173** comprises a second determining system determining at a second moment in time a second weight, a second size and/or a second shape of the consignment. A step **175** comprises a processor determining a weight difference between the second weight and the first weight, a size difference between the second size and the first size and/or a shape difference between the second shape and the first shape. A step **177** comprises a processor determining a difference in the consignment on the basis the weight difference, the size difference and/or the shape difference. Step **177** may comprise determining that the consignment might be damaged and/or may comprise determining that the consignment might be a threat.

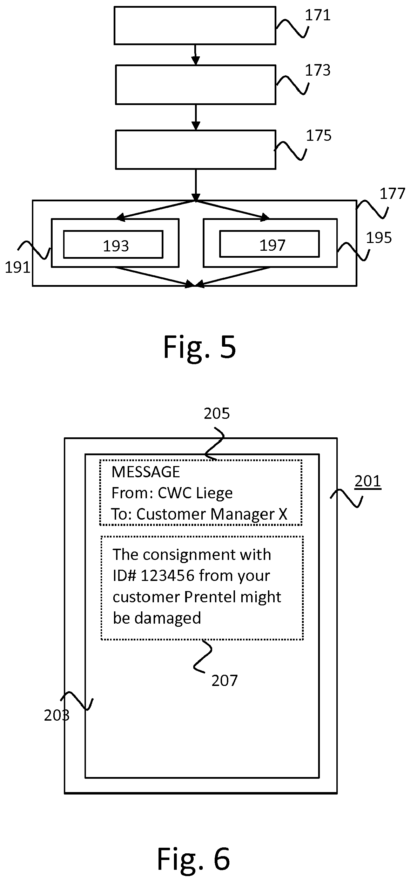

*A* second embodiment of the method of determining a difference in a consignment is shown in **Fig. 4**. The second embodiment extends the first embodiment. A step **179**, performed after step **177**, comprises transmitting a notification to at least one predetermined recipient if the consignment might be damaged or might be a threat. An example of such a notification is shown in **Fig.6**. A device **201** shows a message on a screen **203**. The message comprises a header **205** which indicates the sender (e.g. a measurement system at a site in Liege) and a recipient. The recipient may be internal, e.g. a customer manager, or external. The message further comprises a body **207**. The message body **207** may inform a customer manager, for example, that the consignment with ID# 123456 from customer Prentel might be damaged.

Step **179** comprises a step **181** of transmitting a notification to at least one first predetermined recipient if the consignment might be damaged and a step **183** of transmitting a notification to at least one second predetermined recipient if the consignment might be a threat. The at least one first predetermined recipient and the at least one second predetermined recipient may be specified, e.g. per category, in storage means **163** of server **151** or in storage means of external server **153**, for example. Steps **181** and **183** may be performed in parallel or in sequence, in any desired order. In an alternative embodiment, only one of steps **181** and **183** is performed.

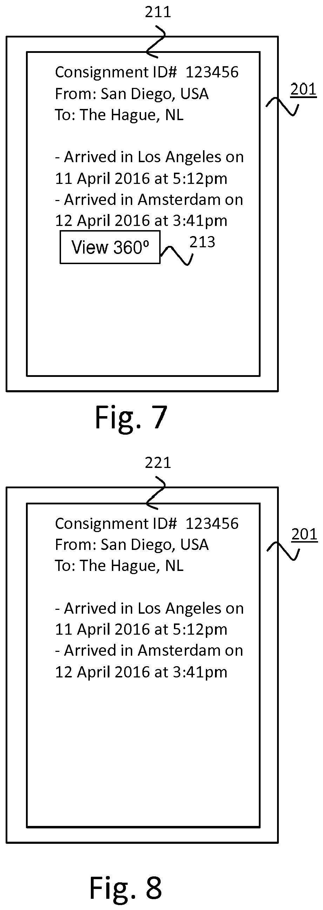

A step **185** comprises disabling access to an image of the consignment in a user interface for a sender and/or an intended recipient of the consignment if the consignment might be damaged. An example of a user interface in which a user can view the shipment status of a consignment is shown in **Fig. 7**. In this example, a device **201** shows a screen **211** (e.g. of a web page or application) in which the status of a consignment with id# 123456 shipping from San Diego, USA to The Hague, Netherlands is shown. The consignment arrived in Los Angeles on 11 April 2015 at 5:12pm and in Amsterdam on 12 April 2015 at 3:41 pm. With a "View 360°" button **213**, the user can normally access an image of the consignment. However, when the consignment might be damaged, it may be preferable to contact the customer personally and prevent, as shown in **Fig.8****,** that the sender or intended recipient discovers that the consignment is damaged by accessing the image. After the customer has been personally informed, the access may be enabled again.

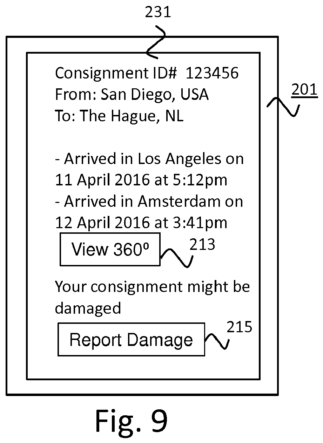

A step **187** comprises indicating in a user interface for a sender of the consignment that the consignment might be damaged. The user interface of **Fig.7** is extended in **Fig. 9** with a message that the sender's consignment might be damaged. In this embodiment, step **187** is followed by a step **189**. Step **189** comprises allowing the sender of the consignment to stop transport of the consignment to an intended recipient of the consignment. If the customer determines that the consignment is indeed damaged, he can report this to the shipping company. For example, he may be able to use a "Report Damage" button **215** as shown in **Fig. 9** for this purpose. One of the options provided to the sender of the consignment after clicking the "Report Damage" button **215** may be to stop transport of the consignment so that the sender may ship a replacement. Steps **185**, **179** and **187** may be performed in parallel or in sequence, in any desired order, or partly in parallel and partly in sequence.

A third embodiment of the method of determining a difference in a consignment is shown in **Fig. 5**. The third embodiment extends the first embodiment. The second embodiment and the third embodiment may be combined.

Step **177** comprises a step **191** of determining that the consignment might be damaged on the basis of the weight difference, the size difference and/or the shape difference. Step **191** comprises a step **193** of determining that the consignment might be damaged if the second weight is at least a certain amount lower than the first weight, the second size is at least a certain amount smaller than the first size and/or the first shape and the second shape differ at least a certain amount. The certain amount may depend on the accuracy of the determining/measurement system. The certain amount may be specified as a percentage, for example. A difference in shape may be determined by determining the parts of the first shape and the parts of the second shape that are not overlapping, for example. For example, a difference in shape may be determined as a percentage by dividing the surface area of the nonoverlapping parts by the surface area of the first shape or of the second shape.

Step **177** further comprises a step **195** of determining that the consignment might be a threat on the basis of the weight difference and/or the size difference. Step **195** comprises a step **197** of determining that the consignment might be a threat when the second weight is at least a certain amount higher than the first weight and/or the second size is at least a certain amount larger than the first size. The certain amount may depend on the accuracy of the determining/measurement system. The certain amount may be specified as a percentage, for example.

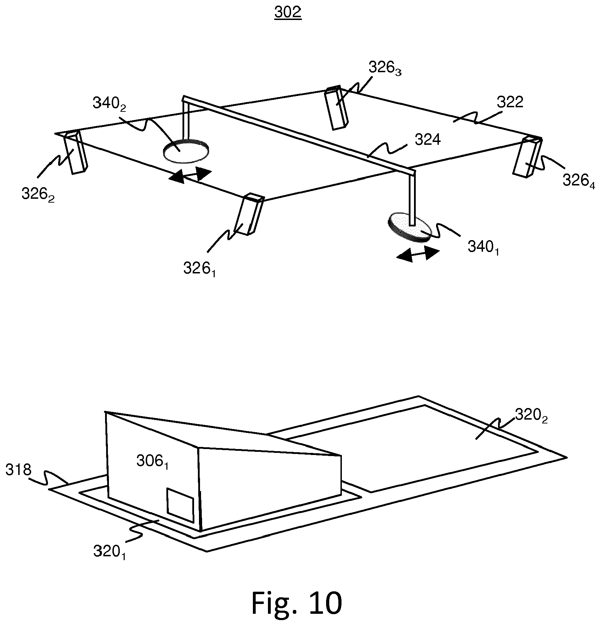

**Figs. 10** to **16** depict three embodiments of a measurement system (determining system) that may be used with or in the system of the invention.

**Fig. 10** depicts a first embodiment of a Check Weight Cube (CWC) **302** for non-conveyables that is optimized for high throughput processing. A weighing system **318** comprises two electronic scales **320₁** and **320₂**. The electronic scales **320₁₋₂** are integrated in the floor of a depot such that the surface of the floor matches the top surface of the scales. This way forklifts can mount and demount consignments in a very fast way. A first consignment **306₁** is shown placed in the first measurement area **320₁.**

The volume scanning system **322** comprises four cameras **326₁₋₄**. In this embodiment, the cameras **326₁₋₄** are fixed at the edges of the volume scanning system **322** and are not movable. The cameras **326₁₋₄** are used to create a surround view, e.g. 360 degree view, of the first consignment **306₁**. The cameras **326₁₋₄** may also be used to read markings, e.g. a bar code representing a consignment ID, on the first consignment **306₁**. The volume scanning system **322** comprises a single movable frame **324**. On this movable frame **324**, two (e.g. laser and/or ultrasound) distance measurement devices **340₁₋₂** have been mounted at the ends, i.e. at fixed positions, of the moveable frame **324**. By moving the movable frame **324**, these (e.g. laser and/or ultrasound) distance measurement devices **340₁₋₂** are used to create a point cloud to represent the external surface of the first consignment **306₁**. By analyzing this point cloud, the size, e.g. the volume and/or the dimensions, of the consignment may be determined.

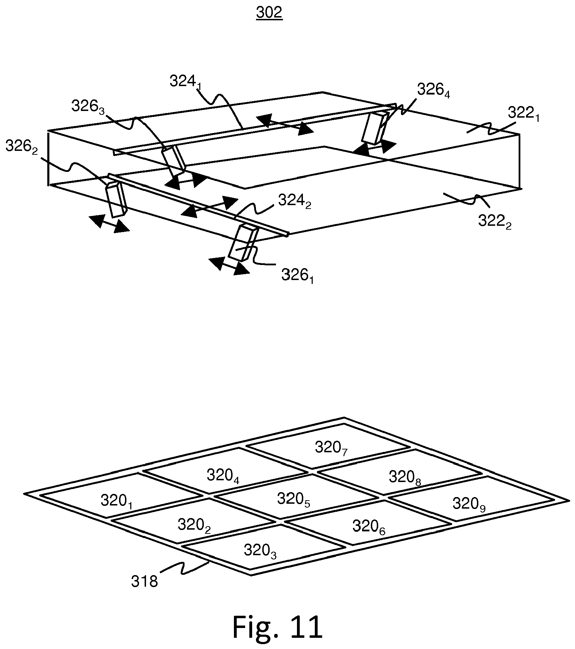

**Fig. 11** depicts a second embodiment of a Check Weight Cube (CWC) **302** for non-conveyables. The weighing system **318** of the CWC **302** comprises nine electronic scales **320₁₋₉**. The volume scanning system **322** comprises four movable cameras **326₁₋₄**. In this embodiment, the volume scanning system **322** comprises mounting frames **324** for mounting the movable cameras **326₁₋₄** so that the cameras **326₁₋₄** can be moved to different x,y positions in a plane parallel to the top surface of the scales **320₁₋₉**.

The plurality of scales **320₁₋₉** under the volume scanning system **322** can be controlled such that one or more of the scales of the plurality of scales **320₁₋₉** forms a scale for consignments of a particular size. Hence, the plurality of scales **320₁₋₉** can be configured into different scales of different sizes. This way, scanning of different consignments can be performed in parallel. Once the scanning process is finished, the data is transmitted to the server **151** of **Fig. 2**. Different consignments may be loaded onto different scales of the plurality of scales **320₁₋₉** of the weighing system **318** of the CWC **302**. In that case, the weighing system **318** senses that a first consignment **306₁** is loaded onto four electronic scales **320_{1,2,4,5}** which are configured as a first combined scale for weighing the first consignment. Similarly, a second consignment **306₂** is loaded on two electronic scales **320₇₋₈** that are configured as a second combined scale for weighing the second consignment **306₂** and a third consignment **306₃** is loaded on a single electronic scale **320₉** for weighing the third consignment **306₃.**

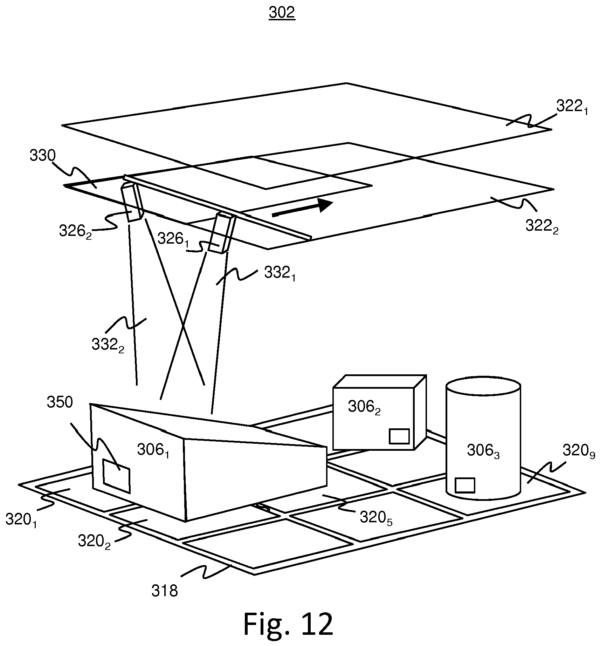

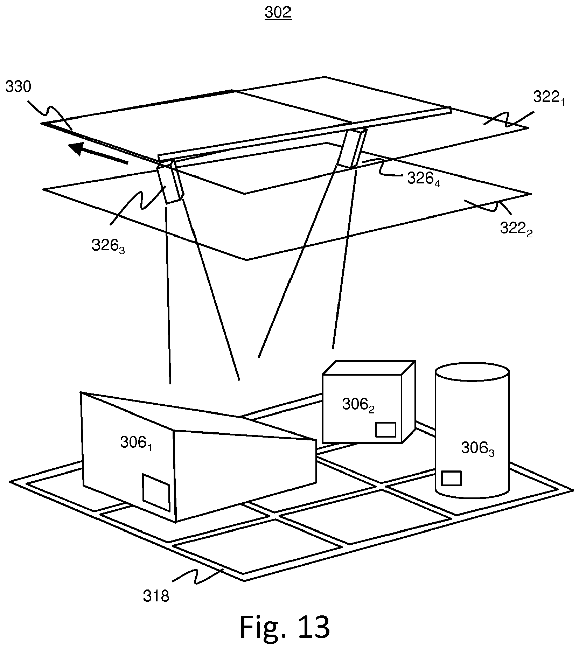

After the consignments have been loaded on the electronic scales, the weighing and scanning process is started. To that end, the first combined scale weighs the first consignment **306₁**. As the CWC **302** knows the position of the scales in the matrix it uses this information in order to define a scanning area **330**, see **Fig.12. Fig. 12** depicts cameras **326₁** and **326₂** moving to the right in order to perform a first scan of consignment **306₁** in scanning area **330** with the help of scanning beams **332₁** and **332₂.** **Fig. 13** depicts cameras **326₃** and **326₄** moving to the back in order to perform a second scan in scanning area **330** of consignment **306₁**. After the scans have been completed, the obtained information, i.e. the consignment ID, weight, size and/or shape are transmitted to the server **151** of **Fig.2**.

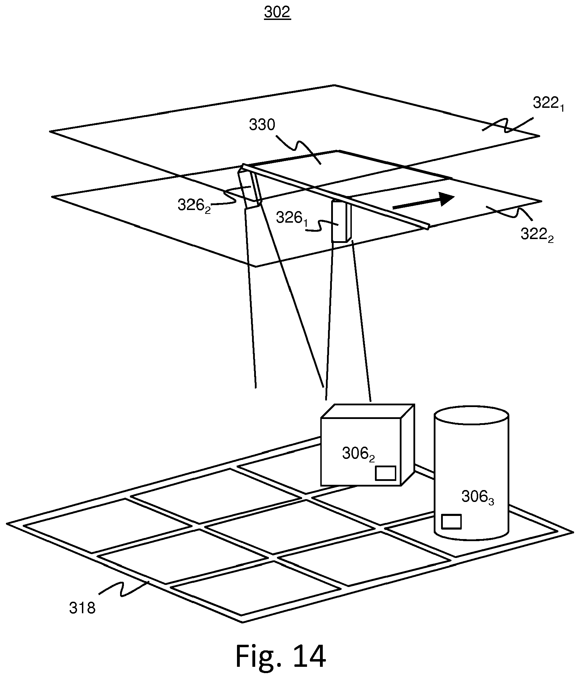

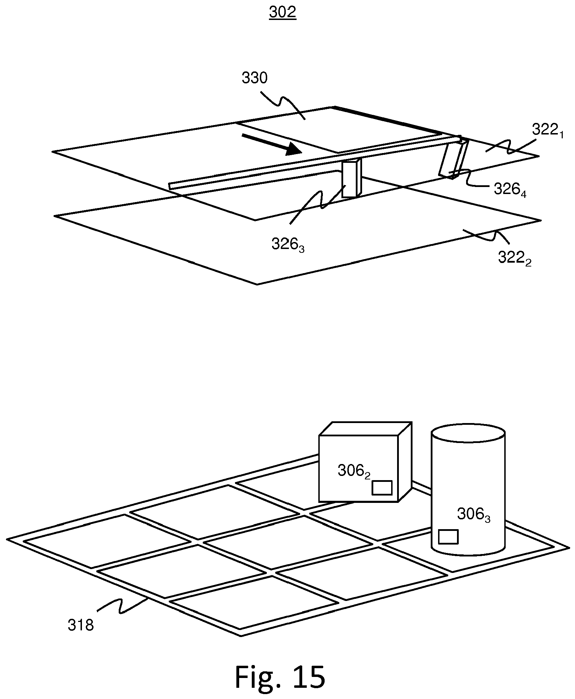

**Fig. 14** shows the consignment scanning being repeated for consignment **306₂**. **Fig. 15** shows the CWC **302** after both scans of consignment **306₂** have been completed. The CWC **302** may execute the loading, weighing, scanning and unloading process depicted in **Figs. 11** to **15** for multiple consignments in parallel (or at least partly in parallel). For example, during the weighing and scanning process of a first consignment **306₁** a second consignment **306₂** may be loaded onto scales that are not used for the weighing and scanning process of the first consignment **306₁**. Alternatively and/or in addition, during the weighing and scanning process of a first consignment **306₁** a third consignment **306₃** may be unloaded from the weighing system **318**.

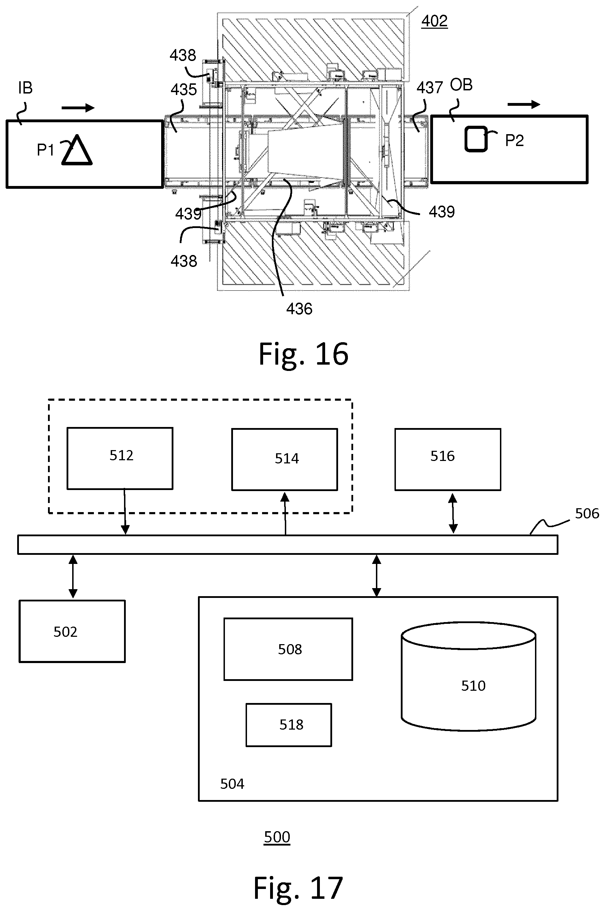

**Fig. 16** depicts an embodiment of a Check Weight Cube (CWC) **402** for conveyable mail pieces **P1**, **P2,** i.e. mail pieces that can be transported over conveyor belts.

CWC **402** is located between an in-belt **IB** and an out-belt **OB** and comprises an in-feeder belt **435**, a scale belt **436** and an outfeeder belt **437**. Weight measurement is performed on scale belt **436** and may comprise a short stop of the scale belt **436**. Markings, e.g. bar codes, are identified using a camera-based identification system **438**, which allows markings to be identified from e.g. five sides (front, back, left, right, top). The camera-based identification system **438** may comprise five cameras, which may be equipped with illumination if necessary. Size measurement, e.g. of dimensions and/or volume, is performed using laser and/or ultrasound distance measurement devices **439**. Software may be used to calculate a three-dimensional volume shape of the mail piece as the smallest enclosing rectangular box in real time and may also be used to determine stackability of the mail piece. Output of the measurement devices **439** may also be provided to the camera-based identification system **438** to allow it to focus better on the consignment being scanned. A control system may be provided to ensure that mail pieces are fed into the measurement system with the correct gaps in between to allow appropriate measurement of the weight and size.

**Fig. 17** depicts a block diagram illustrating an exemplary data processing system that may perform the methods as described with reference to **Figs. 3** to **5**.

As shown in **Fig. 17**, the data processing system **500** may include at least one processor **502** coupled to memory elements **504** through a system bus **506**. As such, the data processing system may store program code within memory elements **504**. Further, the processor **502** may execute the program code accessed from the memory elements **504** via a system bus **506**. In one aspect, the data processing system may be implemented as a computer that is suitable for storing and/or executing program code. It should be appreciated, however, that the data processing system 500 may be implemented in the form of any system including a processor and a memory that is capable of performing the functions described within this specification.

The memory elements **504** may include one or more physical memory devices such as, for example, local memory **508** and one or more bulk storage devices **510**. The local memory may refer to random access memory or other non-persistent memory device(s) generally used during actual execution of the program code. A bulk storage device may be implemented as a hard drive or other persistent data storage device. The processing system **500** may also include one or more cache memories (not shown) that provide temporary storage of at least some program code in order to reduce the number of times program code must be retrieved from the bulk storage device **510** during execution.

Input/output (I/O) devices depicted as an input device **512** and an output device **514** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 17** with a dashed line surrounding the input device **512** and the output device **514**). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **516** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **500**, and a data transmitter for transmitting data from the data processing system **500** to said systems, devices and/or networks. Modems, cable modems, and Ethernet cards are examples of different types of network adapter that may be used with the data processing system **500**.

As pictured in **Fig. 17**, the memory elements **504** may store an application **518**. In various embodiments, the application **518** may be stored in the local memory **508**, the one or more bulk storage devices **510**, or separate from the local memory and the bulk storage devices. It should be appreciated that the data processing system **500** may further execute an operating system (not shown in **Fig. 17**) that can facilitate execution of the application **518**. The application **518**, being implemented in the form of executable program code, can be executed by the data processing system **500**, e.g., by the processor **502**. Responsive to executing the application, the data processing system **500** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **502** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of determining a difference in a consignment, comprising the steps of:
- a first determining system determining (171) at a first moment in time a first weight, a first size and/or a first shape of a consignment;
- a second determining system determining (173) at a second moment in time a second weight, a second size and/or a second shape of said consignment, said second moment in time being later than said first moment in time;
- a processor determining (175) a weight difference between said second weight and said first weight, a size difference between said second size and said first size and/or a shape difference between said second shape and said first shape; and
- a processor determining (177) a difference in said consignment on the basis said weight difference, said size difference and/or said shape difference.

2. A method as claimed in claim 1, wherein the step of determining (177) a difference in said consignment comprises determining (193) that said consignment might be damaged and/or determining (197) that said consignment might be a threat.

3. A method as claimed in claim 2, further comprising the step of transmitting (179) a notification to at least one predetermined recipient if said consignment might be damaged or might be a threat.

4. A method as claimed in claim 3, wherein the step of transmitting (179) a notification to at least one predetermined recipient comprises transmitting (181) a notification to at least one first predetermined recipient if said consignment might be damaged and transmitting (183) a notification to at least one second predetermined recipient if said consignment might be a threat.

5. A method as claimed in any one of claims 2 to 4, wherein the step of determining (177) a difference in said consignment comprises determining (191) that said consignment might be damaged on the basis of said weight difference, said size difference and/or said shape difference.

6. A method as claimed in claim 5, further comprising the step of disabling (185) access to an image of said consignment in a user interface for a sender and/or an intended recipient of said consignment if said consignment might be damaged.

7. A method as claimed in claim 5 or 6, further comprising the step of indicating (187) in a user interface for a sender of said consignment that said consignment might be damaged.

8. A method as claimed in claim 7, further comprising the step of allowing (189) said sender of said consignment to stop transport of said consignment to an intended recipient of said consignment.

9. A method as claimed in any one of claims 5 to 8, wherein the step of determining (191) that said consignment might be damaged comprises determining (193) that said consignment might be damaged if said second weight is at least a certain amount lower than said first weight, said second size is at least a certain amount smaller than said first size and/or said first shape and said second shape differ at least a certain amount.

10. A method as claimed in any one of claims 2 to 9, wherein the step of determining (177) a difference in said consignment comprises determining (195) that said consignment might be a threat on the basis of said weight difference and/or said size difference.

11. A method as claimed in claim 10, wherein the step of determining (195) that said consignment might be a threat comprises determining (197) that said consignment might be a threat when said second weight is at least a certain amount higher than said first weight and/or said second size is at least a certain amount larger than said first size.

12. A computer program or suite of computer programs comprising at least one software code portion or a computer program product storing at least one software code portion, the software code portion, when run on a computer system, being configured for performing the method of any one of claims 1 to 11.

13. A system (150) for determining a difference in a consignment, comprising:
- a first determining system (141) configured to determine at a first moment in time a first weight, a first size and/or a first shape of a consignment;
- a second determining system (142-148) configured to determine at a second moment in time a second weight, a second size and/or a second shape of said consignment, said second moment in time being later than said first moment in time; and
- at least one processor (161) configured to determine a weight difference between said second weight and said first weight, a size difference between said second size and said first size and/or a shape difference between said second shape and said first shape and to determine a difference in said consignment on the basis of said weight difference, said size difference and/or said shape difference.
